# EUROPEAN PATENT APPLICATION

(11) **EP 4 769 525 A1**
(43) Date of publication of application: **01.07.2026**
(21) Application number: 25226965.9
(22) Date of filing: 23.12.2025
(51) Int. Cl.: H01M 4/133, H01M 4/134, H01M 4/36, H01M 4/62, H01M 4/38, H01M 4/485, H01M 4/587

(54) **NEGATIVE ELECTRODE ACTIVE MATERIAL FOR RECHARGEABLE BATTERY, METHOD OF PREPARING THE NEGATIVE ELECTRODE ACTIVE MATERIAL AND RECHARGEABLE BATTERY INCLUDING THE NEGATIVE ELECTRODE ACTIVE MATERIAL**

(30) Priority: 26.12.2024 KR 20240196934
(71) Applicant: SAMSUNG SDI CO., LTD., Yongin-si, Gyeonggi-do 17084 (KR)
(72) Inventor: YOUM, Chul, 16678 Suwon-si (KR)
(74) Representative: Marks & Clerk LLP

(57) **Abstract**

The present invention relates to a negative electrode active material for a rechargeable battery, a method of preparing the same, and a rechargeable battery including the same, wherein the negative electrode active material for a rechargeable battery includes a crystalline carbon-containing layer surrounding a hollow cavity; a silicon-based oxide contained within the hollow cavity; and an amorphous carbon-containing layer formed on an outer surface of the crystalline carbon-containing layer.

## Description

### BACKGROUND

### 1. Field

The present disclosure relates to a negative electrode active material for a rechargeable battery, a method of preparing the negative electrode active material, and a rechargeable battery including the negative electrode active material.

### 2. Discussion of Related Art

With the rapid spread of electronic devices that use batteries, such as cellular phones, laptop computers and electric vehicles, the demand for rechargeable batteries with high energy density and high capacity is has increased. Accordingly, there has been research and development to improve the performance of rechargeable lithium batteries.

A rechargeable lithium battery includes a positive electrode and a negative electrode, which contain active materials capable of intercalation and deintercalation of lithium ions, and an electrolyte. A rechargeable lithium battery generates electrical energy through oxidation and reduction reactions when lithium ions are intercalated/deintercalated into/from the positive electrode and the negative electrode.

Silicon-based negative electrode active materials used as negative electrode active materials in rechargeable lithium batteries undergo severe volume expansion during charging and discharging. To address this problem, silicon-based negative electrode active materials have been developed by forming composite structures with carbon to mitigate the volume change of silicon. However, repeated volume changes of silicon can cause structural collapse of these composite structures, which results in reduced battery performance.

### SUMMARY OF THE DISCLOSURE

The present disclosure is directed to providing a negative electrode active material for a rechargeable battery that does not exhibit any morphological change due to the volume change of a silicon-based compound during charging and discharging of the battery.

The present disclosure is also directed to providing a negative electrode active material for a rechargeable battery with excellent battery capacity and an excellent capacity retention rate.

The present disclosure is also directed to providing a method of preparing a negative electrode active material for a rechargeable battery.

The present disclosure is also directed to providing a rechargeable battery including a negative electrode active material.
1.According to an aspect of the present disclosure, there is provided a negative electrode active material for a rechargeable battery, including crystalline carbon-containing layers surrounding a hollow cavity; a silicon-based oxide contained within the hollow cavity; and amorphous carbon-containing layers formed on outer surfaces of the crystalline carbon-containing layers.
2. The negative electrode active material of 1, wherein the silicon-based oxide is a lithium silicon-based oxide.
3. The negative electrode active material of 1-2, wherein the silicon-based oxide has a circular, elliptical or amorphous cross-sectional shape, or a fiber-like shape.
4. The negative electrode active material of 1-3, wherein a ratio of the volume of the silicon-based oxide to the total volume of the hollow cavities is 0.3 to 0.7.
5. The negative electrode active material of 1-4, wherein the negative electrode active material has a porosity of 30 to 45%.
6. The negative electrode active material of 1-5, wherein the negative electrode active material has a true density of 1.3 to 1.9 g/cc.
7. The negative electrode active material of 1-6, wherein the negative electrode active material has a pellet density of 0.5 to 1.0 g/cc.
8. The negative electrode active material of 1-7, wherein the crystalline carbon-containing layers have a thickness of 50 nm or more and 400 nm or less, and the amorphous carbon-containing layers have a thickness of 100 nm or more and 600 nm or less.
9. The negative electrode active material of 1-8, wherein a weight ratio of amorphous carbon to crystalline carbon in the negative electrode active material is 1.0 or more and 7.0 or less.
10. The negative electrode active material of 1-9, wherein a weight ratio of silicon to total carbon (including crystalline carbon and amorphous carbon) in the negative electrode active material is 0.5 or more and 1.5 or less.
11. The negative electrode active material of 1-10, wherein the negative electrode active material has an average particle diameter (D50) of 5 to 20 µm.
12. The negative electrode active material of 1-11, wherein the crystalline carbon-containing layers further include a graphitization catalyst.
13. The negative electrode active material of 12, wherein the graphitization catalyst is included in an amount of 1 to 10 wt%, for example, 3 to 5 wt%, in the negative electrode active material.
14. The negative electrode active material of 1-13, wherein the negative electrode active material includes particles that are primary particles, secondary particles formed by the assembly of the primary particles, or a combination thereof, with each of the particles include a hollow cavity of the hollow cavities and a crystalline carbon containing layer of the crystalline carbon containing layers.
15. The negative electrode active material of 1-14, wherein only the silicon-based oxide is present in the hollow cavities.
16.According to another aspect of the present disclosure, there is provided a method of preparing a negative electrode active material for a rechargeable battery, the method including preparing carbon-silicon-based oxide composite particles including a carbon matrix having pores, wherein at least a portion of the pores is filled with a silicon-based oxide; forming crystalline carbon-containing layers on outer surfaces of the composite particles; removing the carbon matrix from the composite particle to produce precursor particles of a negative electrode active material that include hollow cavities surrounded by the crystalline carbon-containing layers and the silicon-based oxide contained within the hollow cavities; and forming amorphous carbon-containing layers on outer surfaces of the precursor particles.
17. The method of 16, wherein the carbon-silicon-based oxide composite particles are prepared by dispersing a mixture of a porous amorphous carbon matrix and a liquid silane compound in a solvent and then subjecting the mixture to oxidation treatment.
18. The method of 16-17, wherein the crystalline carbon-containing layer is formed by mixing the carbon-silicon-based oxide composite particles with a solution including a mixture of a crystalline carbon precursor and a graphitization catalyst and then graphitizing the resulting mixture.
19. The method of 16-18, wherein the carbon matrix is removed by oxidation treatment of the carbon matrix.

According to still another aspect of the present disclosure, there is provided a rechargeable battery including a negative electrode including the above-described negative electrode active material and a positive electrode.

At least some of the above and other features of the invention are set out in the claims.

### BRIEF DESCRIPTION OF THE DRAWINGS

Features and advantages of the present disclosure will become more apparent to those of ordinary skill in the art by embodiments described below with reference to the accompanying drawings.
FIGS. 1 to 3 illustrate a negative electrode active material for a rechargeable battery according to an embodiment of the present disclosure;
FIG. 4 illustrates a method of preparing a negative electrode active material for a rechargeable battery according to an embodiment of the present disclosure; and
FIGS. 5 to 8 illustrate rechargeable lithium batteries according to embodiments of the present disclosure.

### DETAILED DESCRIPTION OF EMBODIMENTS

Hereinafter, embodiments of the present disclosure will be described in detail. However, the embodiments are presented as examples, and the present disclosure is not limited to the described embodiments.

Unless otherwise specified herein, when a part such as a layer, a film, an area, a plate, etc. is said to be "on" another part, it includes not only the case where it is "directly on" the other part, but also the case where another part is present therebetween.

Unless otherwise specified in this specification, a singular may also include the plural. In addition, unless otherwise specified, "A or B" may mean "including A," "including B," or "including A and B."

In this specification, "a combination thereof" may mean a mixture, a laminate, a composite, a copolymer, an alloy, a blend, and a reaction product of the components.

Unless otherwise defined herein, the particle size may be an average particle diameter. In addition, particle size may refer to the average particle diameter (D50), which is the diameter of particles with a cumulative volume of 50 vol% in the particle size distribution. The average particle diameter (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle diameter (D50) value may be obtained by performing data analysis, counting the number of particles in each particle size range, and then calculating the D50 value therefrom. Alternatively, the average particle diameter may be measured using a laser diffraction method. When measuring the average particle diameter by the laser diffraction method, the average particle diameter (D50) may be calculated based on 50% of the particle size distribution after dispersing the target particles in a dispersion medium, introducing the particles into a commercially available laser diffraction particle size measuring device (such as MT 3000 by Microtrac Retsch GmbH), and irradiating the particles with ultrasonic waves of about 28 kHz at an output of 60 W.

Hereinafter, a negative electrode active material for a rechargeable battery, a method of preparing the negative electrode active material, and a rechargeable battery including the negative electrode active material according to the present disclosure are described in detail.

Only rechargeable lithium batteries are described below. However, the present disclosure may also be applied to rechargeable batteries using other types of metal ions in addition to lithium batteries.

The negative electrode active material for a rechargeable lithium battery according to an embodiment does not undergo any morphological change due to the volume change of the silicon-based compound (silicon-based negative electrode active material) during battery charging and discharging. Therefore, a negative electrode plate including the negative electrode active material does not expand during battery charging and discharging, thereby providing long lifetime effects to the battery.

The negative electrode active material includes a hollow cavity surrounded by a crystalline carbon-containing layer; a silicon-based oxide contained within the hollow cavity; and an amorphous carbon-containing layer formed on an outer surface of the crystalline carbon-containing layer.

The amorphous carbon may have a D/G value of equal to or greater than about 0.3.

The crystalline carbon may have a D/G value of equal to or less than about 0.2.

The D/G value may be measured by intensity of D-peak and intensity of G-peak from Raman spectroscopy data of the negative electrode material.

The negative electrode active material includes a silicon-based oxide. The silicon-based oxide may improve the capacity of rechargeable batteries by storing and releasing lithium ions in the rechargeable batteries.

In a specific example, the silicon-based oxide may be a silicon-based oxide further containing lithium, e.g., a lithium silicon-based oxide. For example, the lithium silicon-based oxide may be a silicon-based oxide containing lithium and may be LiₓSiO_{y}, but the present disclosure is not limited to this example.

In a specific example, the silicon-based oxide may have a circular, elliptical, or amorphous cross-sectional shape, or may have a fiber-like shape.

The negative electrode active material contains a hollow cavity. The presence of the hollow cavity may be confirmed by analyzing the cross-section of the negative electrode active material using a scanning electron microscope (SEM).

Herein, "hollow cavity" refers to an empty space completely enclosed by the crystalline carbon-containing layer, preferably the inner surface of the crystalline carbon-containing layer as described below. The hollow cavity may provide a space that accommodates the silicon-based oxide. During charging and discharging of the rechargeable battery, the hollow cavity mitigates the volume change of the silicon-based oxide, thereby preventing morphological changes in the negative electrode active material during battery charging and discharging. Thus, the negative electrode plate including the negative electrode active material may not expand at all and a battery including the negative electrode active material may have long lifetime characteristics.

In a specific example, the hollow cavity has a cross-sectional shape that is circular, elliptical, or amorphous.

In a specific example, only the silicon-based oxide is present in the hollow cavity, and the silicon-based oxide is preferably a lithium silicon-based oxide.

In a specific example, a ratio of the volume of the silicon-based oxide to the total volume of the hollow cavity is 0.1 to 0.7, for example, 0.3 to 0.7 or 0.1 to 0.5, 0.2 to 0.4, 0.1, 0.15, 0.2, 0.25, 0.3, 0.35, 0.4, 0.45, 0.5, 0.55, 0.6, 0.65, 0.7. Within these ranges, the volume change of the silicon-based oxide may be mitigated during battery charging and discharging, thereby ensuring that the negative electrode active material has little or no volume change.

The volume of the silicon-based oxide may be measured by etching the negative electrode material using fluorine and using BET (Brunauer, Emmett, Teller) method by nitrogen adsorption volume measurement.

The volume of hollow cavity may be measured using BET (Brunauer, Emmett, Teller) method by nitrogen adsorption volume measurement (measurement of internal pore volume).

By including the hollow cavity and the crystalline carbon-containing layer and amorphous carbon-containing layer described below, the negative electrode active material may have a porosity of 30 to 45%, for example, 30, 31, 32, 33, 34, 35, 36, 37, 38, 39, 40, 41, 42, 43, 44, 45%, 35 to 45%. Herein, "porosity" refers to the percent by volume of empty space in the negative electrode active material. Within the above porosity ranges, the volume change of the silicon-based oxide may be mitigated and a reduction in battery capacity due to the hollow cavity may be also be mitigated. Here, the "empty space" refers to a void with a diameter or a major axis length of 1 nm or more and an internal empty space.

When the negative electrode active material has the above-described hollow cavity and a porosity within the above described ranges, the volume expansion of the silicon-based oxide may be mitigated and a reduction in battery capacity due to the hollow cavity may be prevented.

By including the hollow cavity and the crystalline carbon-containing layer and amorphous carbon-containing layer described below, the negative electrode active material may have a true density of 1.3 to 1.9 g/cc, for example, 1.3, 1.35, 1.4, 1.45, 1.5, 1.55, 1.6, 1.65, 1.7, 1.75, 1.8, 1.85, 1.9 g/cc, 1.3 to 1.5 g/cc. Within these ranges, the volume expansion of the silicon-based oxide may be mitigated, and a reduction in battery capacity due to the hollow cavity may also be mitigated. Here, the true density is the inherent material density of the electrode active material. The true density represents the density when considering only the portion fully filled with material and excluding interparticle voids. True density is measured as a value that is the same as the solid-state density (the theoretical density) when no isolated pores are present. Because density decreases due to internal voids when isolated pores are present in the electrode active material, the true density reflects the density of the solid containing isolated pores. Open pores connected to the surface, not isolated pores, are not reflected in the true density value. Density is measured by dividing weight by volume, and density values may vary depending on the volume measurement method. True density is determined by measuring the volume of the solid material and isolated pores excluding open pores. True density is measured by a method applying Archimedes' principle or using a gas pycnometer. Within the above true density ranges, the volume expansion of the silicon-based oxide may be mitigated, and a reduction in battery capacity due to the hollow cavity may also be mitigated.

By including the hollow cavity and the crystalline carbon-containing layer and amorphous carbon-containing layer described below, the negative electrode active material may have a pellet density of 0.5 to 1.0 g/cc, for example, 0.5, 0.55, 0.6, 0.65, 0.7, 0.75, 0.8, 0.85, 0.9, 0.95, 1.0 g/cc, 0.6 to 0.9 g/cc. The pellet density is determined by applying constant pressure to a fixed mass of electrode active material, and higher pellet density values indicate a smaller volume after compression. Within the above pellet density ranges, the volume expansion of the silicon-based oxide may be mitigated, and a reduction in battery capacity due to the hollow cavity may be prevented.

The negative electrode active material includes a crystalline carbon-containing layer. The crystalline carbon-containing layer may form a hollow cavity along its inner surface to encapsulate the silicon-based oxide while an amorphous carbon-containing layer is formed along its outer surface, thereby forming a structural framework of the negative electrode active material. In particular, when the crystalline carbon-containing layer is formed by the manufacturing method described below, the crystalline carbon-containing layer may form a hollow cavity by the removal of a carbon matrix to thereby form the structural framework of the negative electrode active material.

In a specific example, the crystalline carbon may include graphite, such as natural graphite and artificial graphite, in non-shaped, plate-like, flaky, spherical, or fibrous forms, or a graphitized product of a crystalline carbon precursor, or a combination thereof. For example, the crystalline carbon may be a graphitized product of the crystalline carbon precursor that can easily form the hollow cavity.

The crystalline carbon precursor may be, for example, pitch such as coal tar pitch or petroleum-based pitch, an aromatic carbon material such as sugars, lignin, or cellulose, or polyacrylonitrile.

In a specific example, the crystalline carbon-containing layer may further include a graphitization catalyst. The graphitization catalyst may catalyze the graphitization of the crystalline carbon precursor. The graphitization catalyst may include a metal catalyst that may include transition metals. For example, the metal catalyst may be a compound containing at least one of Fe, Si, Ge, Sn, Pb, P, Sb, Bi, Al, Ga, In, Ti, Mn, Co, Ni, Cu, Zn, Ag, Mg, Sr, and Ba, or a mixture thereof. For example, the metal catalyst may include one or more of Fe, Ni, and Cu.

The graphitization catalyst may be included in an amount of 1 to 10 wt%, for example, 1, 1.5, 2, 2.5, 3, 3.5, 4, 4.5, 5, 5.5, 6, 6.5, 7, 7.5, 8, 8.5, 9, 9.5, 10 wt%, 3 to 5 wt%, in the negative electrode active material. Within these ranges, the graphitization catalyst may promote the graphitization of the crystalline carbon precursor without adversely affecting the battery performance of the negative electrode active material.

In a specific example, the crystalline carbon may be included in an amount of 95 wt% or more, for example, 95 to 100 wt%, or 100 wt%, in the crystalline carbon-containing layer. Within these ranges, the effects of the negative electrode active material may be easily achieved.

The crystalline carbon-containing layer may have a thickness of 50 nm or more and 400 nm or less, for example, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400 nm, 100 nm or more and 300 nm or less. Within these ranges, the volume expansion of the silicon-based oxide may be mitigated, which may improve battery capacity.

The thickness of the crystalline carbon-containing layer may be measured an image from SEM (scanning electron microscope) of the negative electrode active material.

The negative electrode active material includes an amorphous carbon-containing layer on the outer surface of the crystalline carbon-containing layer. The amorphous carbon-containing layer may enhance the battery's lifetime, capacity, and capacity retention rate by mitigating the volume expansion of the silicon-based oxide in the hollow cavity and protecting the crystalline carbon-containing layer from an electrolyte outside the amorphous carbon-containing layer. The amorphous carbon-containing layer may further enhance the electrical conductivity of the negative electrode active material, thereby improving lifetime characteristics, fast-charging characteristics, etc.

The amorphous carbon may be hard carbon, soft carbon, or a combination thereof, and may be, for example, hard carbon. The amorphous carbon-containing layer may include a carbonized product of an amorphous carbon-containing precursor.

The amorphous carbon-containing precursor may include one or more of phenol resin, furan resin, epoxy resin, polyacrylonitrile resin, polyamide resin, petroleum-based heavy oil, organic synthetic pitch, polyimide resin, polyamide-imide resin, synthetic pitch, petroleum-based pitch, coal-based pitch, tar, mesophase pitch, coal-based oil, and organic synthetic pitch. In a specific example, the amorphous carbon may be included in an amount of 95 wt% or more, for example, 95 to 100 wt%, or 100 wt%, in the amorphous carbon-containing layer.

The thickness of the amorphous carbon-containing layer may be greater than that of the crystalline carbon-containing layer. For example, the amorphous carbon-containing layer may have a thickness of 100 nm or more and 600 nm or less, for example, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600 nm, 200 nm or more and 550 nm or less. Within these ranges, the crystalline carbon-containing layer may be protected from an electrolyte.

The thickness of the amorphous carbon-containing layer may be measured an image from SEM (scanning electron microscope) of the negative electrode active material.

In the negative electrode active material, the amount of crystalline carbon in the crystalline carbon-containing layer and the amount of amorphous carbon in the amorphous carbon-containing layer may need to be adjusted to an appropriate range. This adjustment may ensure mitigation of the volume expansion of the silicon-based oxide in the hollow cavity and the protective effect of the crystalline carbon-containing layer against an electrolyte outside the amorphous carbon-containing layer.

In specific examples, the weight ratio of amorphous carbon to crystalline carbon in the negative electrode active material may be 1.0 or more and 7.0 or less, for example, 1.0, 1.5, 2.0, 2.5, 3.0, 3.5, 4.0, 4.5, 5.0, 5.5, 6.0, 6.5, 7.0, 1.0 or more and 6.0 or less, or 1.5 or more and 5.8 or less. Within these ranges, the volume expansion of the silicon-based oxide in the hollow cavity may be mitigated, and the crystalline carbon-containing layer may be protected from an external electrolyte.

Each of the amount of amorphous carbon and the amount of crystalline carbon may be measured using TGA (thermogravimetric analysis) of the negative electrode material.

The silicon amount and total carbon amount (the sum of the amount of crystalline carbon and the amount of amorphous carbon) in the negative electrode active material may need to be adjusted to an appropriate range. This may improve battery capacity and reduce the expansion rate of the battery. In a specific example, the weight ratio of silicon to total carbon (crystalline carbon and amorphous carbon) in the negative electrode active material may be 0.5 or more and 1.5 or less, for example, 0.5, 0.6, 0.7, 0.8, 0.9, 1.0, 1.1, 1.2, 1.3, 1.4, 1.5, 0.5 or more and 1.3 or less, or 0.6 or more and 1.25 or less. Within these ranges, battery capacity may be improved and the expansion rate of the battery may be reduced.

The negative electrode active material may have an average particle diameter (D50) of 5 to 20 µm, for example, 5, 6, 7, 8, 9, 10, 11, 12, 13, 14, 15, 16, 17, 18, 19, 20 µm, 6 to 18 µm, or 8 to 15 µm. Within these ranges, the material may be useful as a negative electrode active material.

In specific examples of the negative electrode active material, particles having the hollow cavity and the crystalline carbon-containing layer may be primary particles, secondary particles formed by the assembly of the primary particles, or a combination thereof, with each of the particles including a hollow cavity of the hollow cavities and a crystalline carbon containing layer of the crystalline carbon containing layers. Here, "assembly" refers to the process where primary particles spontaneously or artificially aggregate or cluster together to form an aggregate composed of a plurality of primary particles.

In another example of the negative electrode active material, particles having the hollow cavity, the crystalline carbon-containing layer, and the amorphous carbon-containing layer may be primary particles, secondary particles formed by the assembly of the primary particles, or a combination thereof.

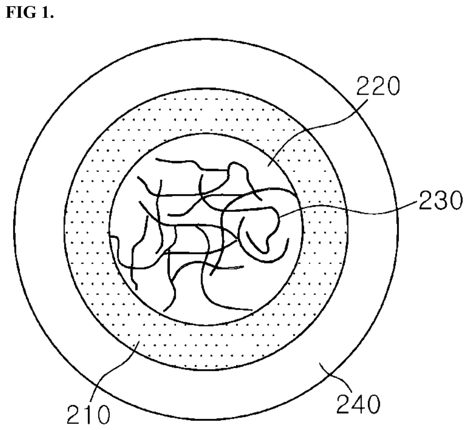

FIGS. 1 to 3 illustrate a negative electrode active material for a rechargeable battery according to an embodiment of the present disclosure.

Referring to FIGS. 1 to 3, the negative electrode active material for a rechargeable battery includes a crystalline carbon-containing layer 210, a hollow cavity 220 surrounded by the crystalline carbon-containing layer 210, an amorphous carbon-containing layer 240 formed on the outer surface of the crystalline carbon-containing layer 210, and a silicon-based oxide 230 in the hollow cavity 220.

Referring to FIG. 1, the negative electrode active material for a rechargeable battery includes a particle having the hollow cavity 220 and the crystalline carbon-containing layer 210, which may be a primary particle.

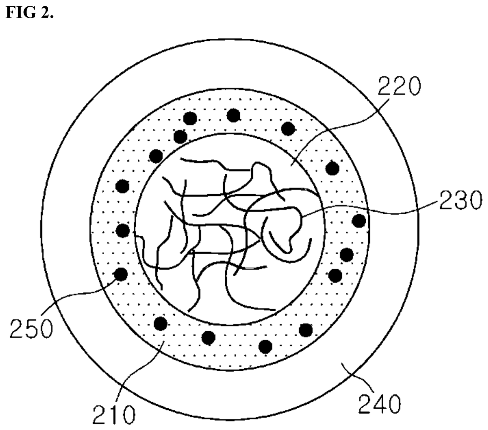

Referring to FIG. 2, the negative electrode active material for a rechargeable battery includes a particle having the hollow cavity 220 and the crystalline carbon-containing layer 210, which is a primary particle. In this embodiment, the crystalline carbon-containing layer 210 includes a graphitization catalyst 250.

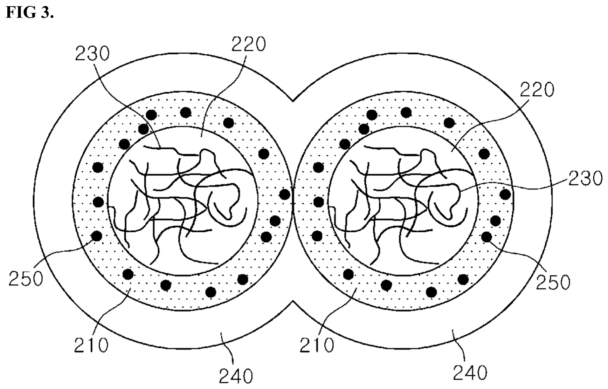

Referring to FIG. 3, the negative electrode active material for a rechargeable battery may include secondary particles formed by the assembly of particles composed of the hollow cavity 220 and the crystalline carbon-containing layer 210.

### Method of preparing negative electrode active material for rechargeable battery

A preparation method includes preparing carbon-silicon-based oxide composite particles that include a carbon matrix having pores, wherein at least a portion of the pores is filled with a silicon-based oxide (step 1); forming a crystalline carbon-containing layer on an outer surface of the composite particles (step 2); removing the carbon matrix from the composite particles to produce precursor particles of a negative electrode active material that include hollow cavities surrounded by the crystalline carbon-containing layers and the silicon-based oxide contained within the hollow cavities (step 3); and forming amorphous carbon-containing layers on outer surfaces of the precursor particles (step 4).

The preparation method may be used to prepare the negative electrode active material for a rechargeable battery.

### <Step 1>

In step 1 for preparing carbon-silicon-based oxide composite particles including a carbon matrix having pores, at least a portion of the pores is filled with a silicon-based oxide. Step 1 may be performed to form the silicon-based oxide in the hollow cavities of the negative electrode active material for a rechargeable battery. The carbon matrix may be removed in step 3 described below.

The carbon matrix may be an amorphous carbon matrix. The amorphous carbon may be hard carbon, soft carbon, or a combination thereof. In a specific example, the amorphous carbon may be hard carbon.

The silicon-based oxide may be the same as described above.

The carbon-silicon-based oxide composite particles may be prepared by dispersing a mixture of a porous amorphous carbon matrix and a liquid silane compound in a solvent, followed by oxidation treatment.

The mixing ratio of the porous amorphous carbon matrix and the liquid silane compound may be adjusted according to the porosity of the porous amorphous carbon matrix. For example, the ratio may be appropriately adjusted to ensure the liquid silane compound adequately fills the pores.

In some examples, the porous amorphous carbon matrix may have a porosity of 1 to 90%, 5 to 80%, 10 to 64%, 10 to 60%, or 10 to 50%. Here, "porosity" refers to the volume fraction of pores with a diameter of 1 nm or more, as measured by a nitrogen adsorption method using the Barret-Joyner-Halenda (BJH) technique.

The mixing ratio of the porous amorphous carbon matrix to the liquid silane compound (the porous amorphous carbon matrix : the liquid silane compound) may be 1:1 to 1:15 by weight, for example, 1:5 to 1:10 by weight.

The silane compound serves as a raw material for the silicon-based oxide. The silane compound may be used in liquid form to ensure that a desired amount of the silane compound is introduced into the pores of the porous amorphous carbon matrix. When the silane compound is used in a gaseous form, the pores of the porous amorphous carbon matrix may become clogged early in the deposition process, causing the silane compound to be deposited on the surface of the porous amorphous carbon matrix, which is not desirable. When the silane compound is in a pulverized solid form, the silane compound may not be properly introduced into the pores of the porous amorphous carbon matrix, and the particle size may not be controlled to match the pore dimensions of the porous amorphous carbon matrix.

In some specific examples, the silane compound may be tetraalkyl orthosilicate, silicon tetrachloride, or a combination thereof. The tetraalkyl orthosilicate may be tetramethyl orthosilicate, tetraethyl orthosilicate, tetrapropyl orthosilicate, tetrabutyl orthosilicate, or a combination thereof.

The mixture of the porous amorphous carbon matrix, the liquid silane compound, and a solvent may further include lithium hydroxide (LiOH). The lithium hydroxide may be used to form the above-described lithium silicon-based oxide.

The solvent may be an alcohol such as ethanol.

Before the oxidation of the mixture, a degassing process may be performed using a vacuum depressurization method. The degassing process may remove air in the pores of the porous amorphous carbon matrix, which allows the liquid silane compound to more easily be introduced into the pores. The degassing process may be performed under vacuum conditions. For example, the degassing process may be performed using a vacuum depressurization method where the pressure is 10⁻³ to 10⁻⁶ MPa. Under such conditions, air in the pores is sufficiently removed. Thus, the liquid silane compound may be completely moved into the pores.

Subsequently, the degassed product undergoes an oxidation process to synthesize the silicon-based oxide, resulting in carbon-silicon-based oxide composite particles having pores filled with the silicon-based oxide. The oxidation process may be performed in an air or oxygen atmosphere at 600 to 750 °C, or 600 to 700 °C. And the oxidation process may be performed by calcination under the above atmospheric and temperature conditions. When the oxidation process is performed under such conditions, the liquid silane compound may form silicon-based oxide particles.

### <Step 2>

Step 2 is for forming a crystalline carbon-containing layer on the outer surface of the carbon-silicon-based oxide composite particles formed in step 1.

In specific examples, the crystalline carbon may include graphite, such as natural graphite and artificial graphite, in non-shaped, plate-like, flaky, spherical, or fibrous forms, or a graphitized product of a crystalline carbon precursor, or a combination thereof. For example, the crystalline carbon may be a graphitized product of a crystalline carbon precursor to easily form the hollow cavities. The crystalline carbon precursor may include, for example, pitch such as coal tar pitch and petroleum-based pitch, an aromatic carbon material such as sugars, lignin, or cellulose, or polyacrylonitrile.

The crystalline carbon-containing layer may be formed by mixing the carbon-silicon-based oxide composite particles from step 1 with a solution including a mixture of a crystalline carbon precursor and a graphitization catalyst and then graphitizing the mixture.

The graphitization catalyst may include a metal catalyst. For example, the metal catalyst may include transition metals. The metal catalyst may be a compound containing at least one of Fe, Si, Ge, Sn, Pb, P, Sb, Bi, Al, Ga, In, Ti, Mn, Co, Ni, Cu, Zn, Ag, Mg, Sr, and Ba, or a mixture thereof. In specific examples, the metal catalyst may include one or more of Fe, Ni, and Cu.

The graphitization may be performed using conventional methods known to those skilled in the art. For example, the graphitization may be performed by heat treatment at 1,000 to 3,000 °C, for example, 1,000 to 2,000 °C, in a nitrogen atmosphere.

The mixing ratio of the carbon-silicon-based oxide composite particles of step 1 to the crystalline carbon precursor (the carbon-silicon-based oxide composite particles of step 1 : the crystalline carbon precursor) may be 10:1 to 10: 10 by weight, for example, 10:3 to 10:6 by weight. Within these ranges, the negative electrode active material may be easily prepared.

### <Step 3>

In step 3, the carbon matrix is removed from the carbon-silicon-based oxide composite particles to obtain precursor particles of the negative electrode active material that include hollow cavities surrounded by the crystalline carbon-containing layers and the silicon-based oxide contained within the hollow cavities. Specifically, step 3 involves removing the carbon matrix excluding the silicon-based oxide from the region enclosed by the inner surfaces of the crystalline carbon-containing layers.

The carbon matrix removal may be performed by oxidation treatment within a temperature range between the oxidation temperature of the carbon matrix and the oxidation temperature of the crystalline carbon-containing layer. For example, the oxidation may be performed by heat treatment at 500 to 1,000 °C, for example, 500 to 600 °C, in an air atmosphere.

### <Step 4>

In step 4, an amorphous carbon-containing layer is formed on the outer surfaces of the precursor particles of the negative electrode active material.

The amorphous carbon may be hard carbon, soft carbon, or a combination thereof. The amorphous carbon-containing layer may include a carbonized product of an amorphous carbon-containing precursor.

The amorphous carbon-containing precursor may include one or more of phenol resin, furan resin, epoxy resin, polyacrylonitrile resin, polyamide resin, petroleum-based heavy oil, organic synthetic pitch, polyimide resin, polyamide-imide resin, synthetic pitch, petroleum-based pitch, coal-based pitch, tar, mesophase pitch, coal-based oil, and organic synthetic pitch.

The amorphous carbon-containing layer may be formed by mixing the precursor particles of the negative electrode active material with the amorphous carbon-containing precursor and then heat treating the mixture in a nitrogen atmosphere at 500 to 3,000 °C, for example, 500 to 1,500 °C.

The mixing ratio of the negative electrode active material precursor particles to the amorphous carbon-containing precursor (the negative electrode active material precursor particles : the amorphous carbon-containing precursor) may be 1:1 to 1:5 by weight, for example, 1:1 to 1:2 by weight. Within these ranges, the negative electrode active material may be easily prepared.

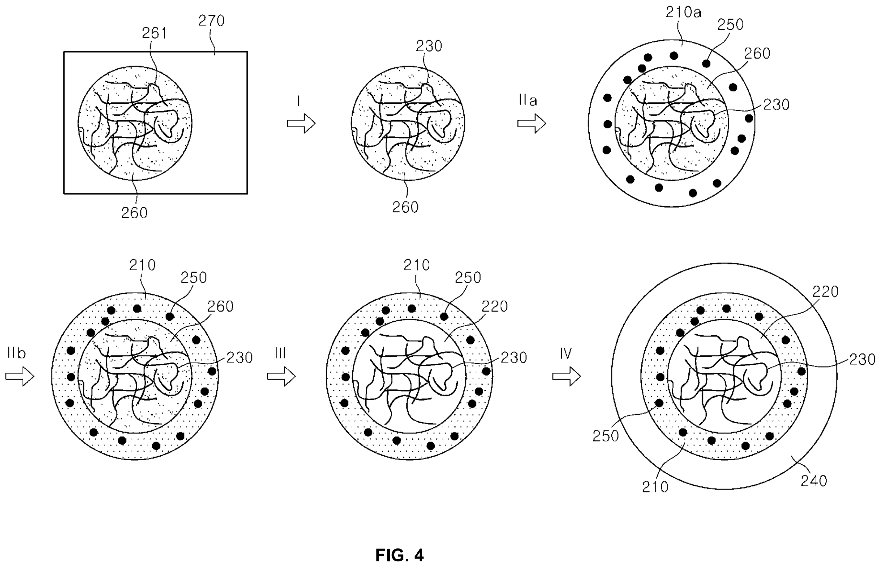

FIG. 4 illustrates a method of preparing a negative electrode active material for a rechargeable battery according to an embodiment of the present disclosure.

Referring to FIG. 4, step I involves preparing a solution 270 by dispersing a mixture of a porous amorphous carbon matrix 260, which has pores 261, and a liquid silane compound in a solvent, followed by oxidation treatment to form a porous amorphous carbon matrix 260 with its pores filled with a silicon-based oxide 230.

In step IIa, particles of the porous amorphous carbon matrix 260 with pores filled with silicon-based oxide 230 are mixed with a solution containing a mixture of a crystalline carbon precursor 210a and a graphitization catalyst 250 to coat the outer surface of the porous amorphous carbon matrix 260 with the silicon-based oxide 230 filled in its pores with the crystalline carbon precursor 210a and the graphitization catalyst 250.

In step IIb, the porous amorphous carbon matrix 260 coated with the crystalline carbon precursor 210a and graphitization catalyst 250 undergoes graphitization to form a crystalline carbon-containing layer 210 on the outer surface.

In step III, the porous amorphous carbon matrix 260 is removed to form a precursor particle including a hollow cavity surrounded by a crystalline carbon-containing layer 210 and the silicon-based oxide 230 contained in the hollow cavity 220.

In step IV, an amorphous carbon-containing layer 240 is formed on the outer surface of the crystalline carbon-containing layer 210 to prepare the negative electrode active material according to an embodiment of the present disclosure.

### Negative electrode plate for rechargeable battery

A negative electrode plate for a rechargeable battery according to an embodiment includes the above-described negative electrode active material for a rechargeable battery. In a specific example, the negative electrode plate may include the above-described negative electrode active material for a rechargeable battery in an amount of 95 wt% or more, for example, 95 to 100 wt%, or 100 wt%, of the total negative electrode active material.

The negative electrode plate may further include one or more of a binder and a conductive material as described below.

### Rechargeable lithium battery

According to one embodiment, the rechargeable lithium battery includes the negative electrode comprising the negative electrode active material; and a positive electrode.

### Negative electrode

The negative electrode for a rechargeable lithium battery may include a current collector and a negative electrode active material layer on the current collector. The negative electrode active material layer includes a negative electrode active material and may further include a binder and/or a conductive material (e.g., an electrically conductive material). In some examples, the negative electrode active material layer may include about 90 wt% to about 99 wt% of the negative electrode active material, about 0.5 wt% to about 5 wt% of the binder, and about 0 wt% to about 5 wt% of the conductive material.

The negative active material includes the negative active material as described above. In specific examples, the negative active material described above may be included in an amount of 95 wt% or more, for example, 95 to 100 wt%, or 100 wt%, of the entire negative active material of the negative active material layer.

The negative electrode active material may include a material that reversibly intercalates/deintercalates lithium ions, a lithium metal, a lithium metal alloy, a material capable of doping/dedoping lithium, or a transition metal oxide. The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy, or a combination thereof. In the formula Si-Q, Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. The silicon-carbon composite may be in a form of silicon particles and amorphous carbon coated on the surfaces of the silicon particles. For example, the silicon-carbon composite may include secondary particles (core) in which primary silicon particles are assembled, and an amorphous carbon coating layer (shell) on the surfaces of the secondary particles. The amorphous carbon may also be between the primary silicon particles, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may function to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause an undesirable chemical change in the rechargeable lithium battery and that conducts electrons can be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

### Positive electrode

A positive electrode for a rechargeable lithium battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

### Positive electrode active material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free lithium nickel-manganese-based oxide, or a combination thereof.

As examples, the following compounds represented the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In these Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of providing high capacity and can be used in a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart electrical conductivity to the electrode. Any material that does not cause undesirable chemical change in the rechargeable lithium battery and conducts electrons can be used. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

Aluminium may be used as the current collector, but the present disclosure is not limited to aluminium.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may function as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), lithium difluoro (oxalato) borate (LiDFOB), and lithium bis(oxalato) borate (LiBOB).

### Separator

Depending on the type of lithium secondary battery, a separator may be present between the positive and negative electrodes. Such separators may include polyethylene, polypropylene, polyvinylidene fluoride, or multilayer films comprising two or more layers thereof. Furthermore, mixed multilayer films, such as a polyethylene/polypropylene two-layer separator, a polyethylene/polypropylene/polyethylene three-layer separator, or a polypropylene/polyethylene/polypropylene three-layer separator, may also be used.

The separator may include a porous substrate and a coating layer comprising an organic material, an inorganic material, or a combination thereof, positioned on one or both surfaces of the porous substrate. The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, cyclic olefin copolymer, polyphenylene sulfide, polyethylene naphthalate, glass fiber, and polytetrafluoroethylene (e.g., TEFLON^{®}), or a copolymer or mixture of two or more thereof. The organic material may include a polyvinylidene fluoride-based polymer or a (meth)acrylic polymer. The inorganic material may include, but is not limited to, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. The organic and inorganic materials may be mixed in one coating layer or may be present in a laminated form with a coating layer including an organic material and a coating layer including an inorganic material.

The rechargeable lithium battery may be cylindrical, prismatic, pouch, or coin-type batteries, and the like depending on its shape.

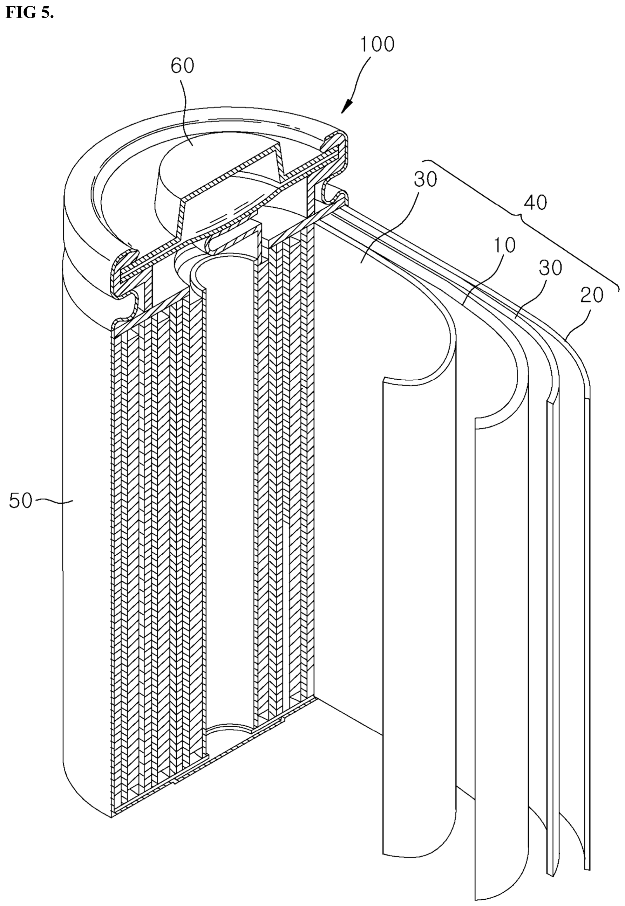

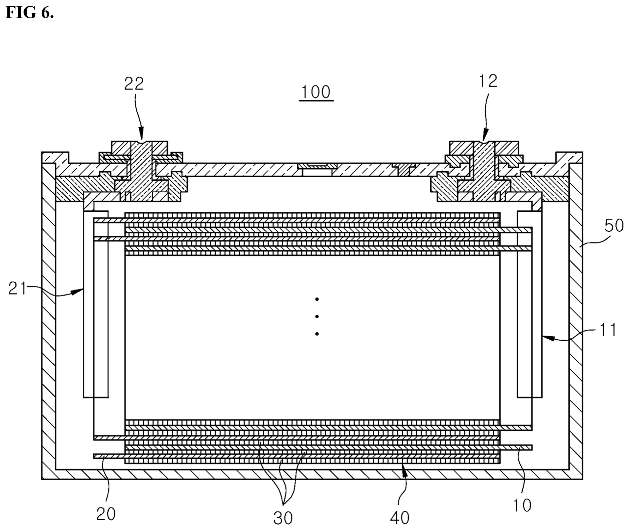

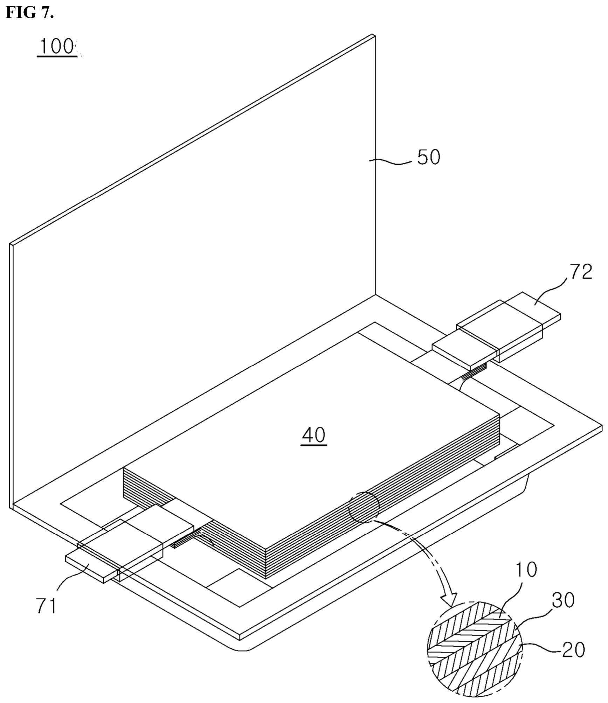

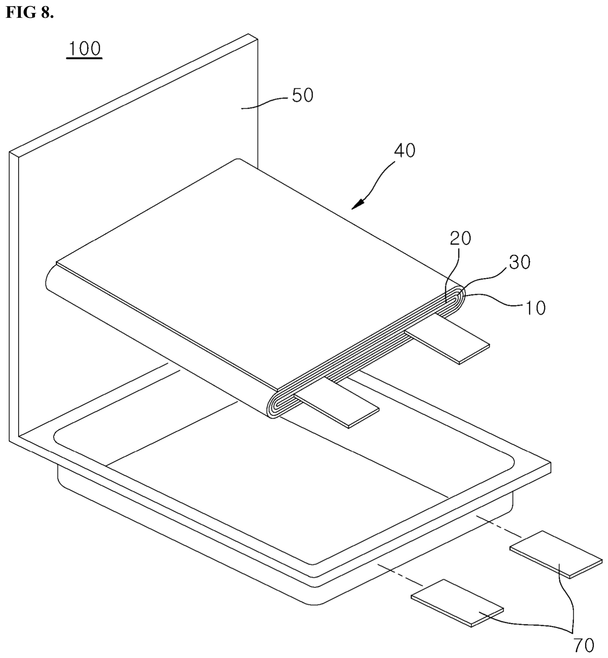

FIGS. 5 to 8 are schematic views of rechargeable lithium batteries according to embodiments of the present disclosure. FIG. 5 shows a cylindrical battery, FIG. 6 shows a prismatic battery, and FIGS. 7 and 8 show pouch-type batteries. Referring to FIGS. 5 to 8, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 5. In FIG. 6, the rechargeable lithium battery 100 may include a positive lead tab 11, a positive terminal 12, a negative lead tab 21, and a negative terminal 22. As shown in FIGS. 7 and 8, the rechargeable lithium battery 100 may include an electrode tab 70, which may be, for example, a positive electrode tab 71 and a negative electrode tab 72 forming an electrical path for inducing the current formed in the electrode assembly 40 to outside of the battery.

The rechargeable lithium battery according to an embodiment may be used in automobiles, mobile phones, and/or various types of electric devices, as non-limiting examples.

Hereinafter, the examples and comparative examples of the present disclosure are described. However, the following examples are only examples, and the present disclosure is not limited to the following examples.

### Example 1

A porous hard carbon matrix (porosity: 60%) was mixed with liquid tetraethyl orthosilicate (TEOS), lithium hydroxide (LiOH) in ethanol to prepare a mixture. The mixing weight ratio of the porous hard carbon matrix to liquid TEOS was 1:10.

The mixture was subjected to a degassing process through vacuum depressurization under a pressure of 10⁻⁶ MPa.

The degassed product was heat-treated at 600 °C for 1 hour to fill the pores of the porous hard carbon matrix with a lithium silicon-based oxide.

The porous hard carbon matrix filled with the lithium silicon-based oxide was mixed with a mixture of lignin and an iron catalyst in a solvent to coat the outer surface of the porous hard carbon matrix with lignin and the iron catalyst. This was followed by heat treatment at 1,100 °C in a nitrogen atmosphere for 1 hour to form crystalline carbon from the lignin. The mixing weight ratio of the porous hard carbon matrix filled with the lithium silicon-based oxide to the lignin was 10:3.

The resulting product was heat-treated in an air atmosphere at 520 °C for 1 hour to remove the porous hard carbon matrix in the crystalline carbon-containing layer.

The obtained product was mixed with petroleum-based pitch in a 1:2 weight ratio and heat-treated in a nitrogen atmosphere at 1,000 °C for 1 hour to prepare a negative electrode active material having a cross-section as shown in FIG. 2. The crystalline carbon-containing layer thickness was 200 nm, the amorphous carbon-containing layer thickness was 500 nm, the average particle diameter (D50) was 10 µm.

A negative electrode slurry was prepared by mixing 97.5 wt% of the prepared negative electrode active material, 1.5 wt% of styrene-butadiene rubber as a binder, and 1.0 wt% of carboxymethyl cellulose as an additive in distilled water.

The negative electrode slurry was applied onto a copper current collector, dried, and roll-pressed to make a negative electrode.

A half-cell was made using the negative electrode, a lithium metal counter electrode, and an electrolyte. The electrolyte was a mixed solvent of ethylene carbonate and dimethyl carbonate (3:7 volume ratio) in which 1 M LiPF₄ is dissolved.

### Example 2

A negative electrode active material was prepared in the same manner as in Example 1, except that a porous hard carbon matrix with a porosity of 40% was used.

### Example 3

A negative electrode active material was prepared in the same manner as in Example 1, except that the mixing weight ratio of the porous hard carbon matrix filled with lithium silicon-based oxide to the lignin was changed to 10:6, and the weight ratio of the resulting product after removing the porous hard carbon matrix in the crystalline carbon-containing layer to the petroleum-based pitch was changed to 1:1.

### Comparative Example 1

A negative electrode active material was prepared in the same manner as in Example 1, except that the heat treatment in an air atmosphere at 520 °C was not performed to prevent the formation of a hollow cavities.

### Comparative Example 2

A negative electrode active material was prepared in the same manner as in Example 1, except that the step of mixing petroleum-based pitch and heat-treating in a nitrogen atmosphere at 1,000 °C for 1 hour was not performed.

### Experimental Example 1: Evaluation of negative electrode active material

### Weight ratio of silicon to carbon (Si/C weight ratio)

The Si/C weight ratio was measured by thermogravimetric analysis (TGA). The ratio was calculated based on the carbon and silicon contents determined as the temperature increased up to 1,000 °C at a rate of 1 °C/min in an oxygen atmosphere using a TGA55 instrument.

### Weight ratio of amorphous carbon to crystalline carbon (amorphous carbon/crystalline carbon weight ratio)

The weight ratio was measured by thermogravimetric analysis (TGA). The ratio was calculated based on the crystalline and amorphous carbon contents determined as the temperature increased up to 1,000 °C at a rate of 1 °C/min in an oxygen atmosphere using a TGA55 instrument.

### Porosity (units: %)

Porosity was measured using a nitrogen adsorption method. Specifically, the porosity was measured using an ASAP2020 instrument, a porosity measurement device, through the Barrett-Joyner-Halenda (BJH) technique.

### True density (units: g/cc)

True density was measured using 1.0 g of the negative electrode active material from the examples and comparative examples by helium gas pycnometry with a Micromeritics Accupyc II 1340 instrument.

### Pellet density (units: g/cc)

Pellet density was measured by placing 1.0 g of the negative electrode active material from the examples and comparative examples into a mold, compressing the material under a pressure of 2.0 tons for 30 seconds using a hydraulic press, and calculating the density of the resulting compacted powder.

### Experimental Example 2: Evaluation of battery

### Capacity (units: mAh/g), expansion rate (units: %), and capacity retention rate (units: %)

A negative electrode active material slurry was prepared by mixing 97.5 wt% of each negative electrode active material prepared in the examples and comparative examples, 1.5 wt% of styrene-butadiene rubber as a binder, and 1.0 wt% of carboxymethyl cellulose as an additive in distilled water. The negative electrode active material slurry was applied onto a copper current collector, dried, and roll-pressed to manufacture a negative electrode.

Half-cells were made using the negative electrode, a lithium metal counter electrode, and an electrolyte. The electrolyte is a mixed solvent of ethylene carbonate and dimethyl carbonate (at a 3:7 volume ratio) in which 1 M LiPF₆ is dissolved.

The half-cells were subjected to charge/discharge cycles to evaluate charging characteristics as follows: 1 cycle of charging at 0.2 C constant current (CC) and constant voltage (CV) and discharging at 0.2 C; 1 cycle of charging at 0.5 C CC and discharging at 0.2 C; 1 cycle of charging at 1C CC and discharging at 0.2 C; and 1 cycle of charging at 2 C CC and discharging at 0.2 C. The charging/discharging conditions were as follows: the constant current (CC) phase was conducted with a cutoff voltage of 10 mV, the constant voltage (CV) phase was conducted with a cutoff time of 15 hours, and the discharge was conducted with a cutoff voltage of 1.5 V. Charging characteristics were measured at each C-rate. The charging characteristics results were calculated and expressed as the ratio of the 2 C CC charge capacity to the 0.2 C CC charge capacity.

The charge/discharge cycle was repeated 1,000 times. The capacity retention rate was calculated as (discharge capacity after 1,000 cycles/discharge capacity after 1 cycle) x 100.

The expansion rate was measured using a thickness monitoring system (TMS). Specifically, the manufactured cell was subjected to a charge/discharge cycle lifetime test at 45 °C with a charge voltage of 4.35 V and a discharge voltage of 2.8 V under 0.5 C/0.5 C cycling while monitoring the cell thickness in real time. The thickness increase rate was calculated by comparing the thickness after 1,000 cycles to the thickness after 1 cycle. The expansion rate may be calculated as: Expansion rate = (cell thickness after 1,000 cycles - cell thickness after 1 cycle) / cell thickness after 1 cycle * 100

The evaluation results are shown in Table 1.

**Table 1**

| | Si/C weight ratio | Amorphous carbon/ crystalline carbon weight ratio | Porosity | True density | Pellet density | Capacity | Expansion rate | Capacity retention rate |
|---|---|---|---|---|---|---|---|---|
| Example 1 | 1.22 | 5.7 | 45 | 1.38 | 0.71 | 1643 | 3 | 91 |
| Example 2 | 0.67 | 5.7 | 38 | 1.45 | 0.77 | 1098 | 4 | 95 |
| Example 3 | 1.21 | 1.5 | 44 | 1.39 | 0.72 | 1662 | 4 | 93 |
| Comparative Example 1 | 0.49 | 15.6 | 6 | 1.93 | 1.02 | 796 | 26 | 62 |
| Comparative Example 2 | 1.41 | 0.03 | 47 | 1.94 | 1.86 | 1781 | 19 | 58 |

As shown in Table 1, the battery cells including the negative electrodes manufactured using the negative electrode active materials for rechargeable batteries of the examples exhibit low expansion rates during charge/discharge cycles, indicating minimal morphological changes caused by the volume change of the silicon-based oxide. In addition, the battery cells including the negative electrodes manufactured using the negative electrode active materials of the examples have excellent battery capacity and capacity retention rates.

On the other hand, the negative electrode active material of Comparative Example 1 did not have hollow cavities formed within the crystalline carbon-containing layer, leading to severe expansion of the silicon-based oxide and a reduction in the battery capacity and capacity retention rate. In the negative electrode active material of Comparative Example 2, the absence of an amorphous carbon-containing layer on the outer surfaces of the crystalline carbon-containing layers resulted in insufficient mitigation of the volume expansion of the silicon-based oxide in the hollow cavities and inadequate protection of the crystalline carbon-containing layer from an external electrolyte, which significantly lowered the capacity retention rate of the battery.

The negative electrode active material for a rechargeable battery according to an aspect of the present disclosure does not exhibit any morphological change due to the volume change of a silicon-based compound during charging and discharging of the battery. Thus, no expansion occurs during battery charging and discharging, enabling the battery to have a long lifetime.

The negative electrode active material for a rechargeable battery according to an aspect of the present disclosure can enable the battery including the negative electrode manufactured using it to exhibit excellent battery capacity and an excellent capacity retention rate.

Although the preferred embodiments of the present disclosure have been described above, the present disclosure is not limited thereto, and various modifications are possible.

## Claims

1. A negative electrode active material for a rechargeable battery, the negative electrode active material comprising:
crystalline carbon-containing layers surrounding a hollow cavity;
a silicon-based oxide contained within the hollow cavity; and
amorphous carbon-containing layers formed on outer surfaces of the crystalline carbon-containing layers.

2. The negative electrode active material of claim 1, wherein the silicon-based oxide is a lithium silicon-based oxide.

3. The negative electrode active material of claim 1 or claim 2, wherein the silicon-based oxide has a circular, elliptical or amorphous cross-sectional shape, or a fiber-like shape.

4. The negative electrode active material of any one of claims 1 to 3, wherein a ratio of the volume of the silicon-based oxide to the total volume of the hollow cavities is 0.3 to 0.7.

5. The negative electrode active material of any one of claims 1 to 4, wherein the negative electrode active material has a porosity of 30 to 45%.

6. The negative electrode active material of any one of claims 1 to 5, wherein the negative electrode active material has a true density of 1.3 to 1.9 g/cc.

7. The negative electrode active material of any one of claims 1 to 6, wherein the negative electrode active material has a pellet density of 0.5 to 1.0 g/cc.

8. The negative electrode active material of any one of claims 1 to 7, wherein:
(i) the crystalline carbon-containing layers have a thickness of 50 nm or more and 400 nm or less, and the amorphous carbon-containing layers have a thickness of 100 nm or more and 600 nm or less; and/or
(ii) a weight ratio of amorphous carbon to crystalline carbon in the negative electrode active material is 1.0 or more and 7.0 or less.

9. The negative electrode active material of any one of claims 1 to 8, wherein:
(i) a weight ratio of silicon to total carbon in the negative electrode active material is 0.5 or more and 1.5 or less, wherein the total carbon is the sum of crystalline carbon and amorphous carbon; and/or
(ii) the negative electrode active material has an average particle diameter (D50) of 5 to 20 µm.

10. The negative electrode active material of any one of claims 1 to 9, wherein the crystalline carbon-containing layers further include a graphitization catalyst, optionally wherein the graphitization catalyst is included in an amount of 1 to 10 wt%, for example, 3 to 5 wt%, in the negative electrode active material.

11. The negative electrode active material of any one of claims 1 to 10, wherein:
(i) the negative electrode active material includes particles that are primary particles, secondary particles formed by the assembly of the primary particles, or a combination thereof, with each of the particles include a hollow cavity of the hollow cavities and a crystalline carbon containing layer of the crystalline carbon containing layers; and/or
(ii) only the silicon-based oxide is present in the hollow cavities.

12. A method of preparing a negative electrode active material for a rechargeable battery, the method comprising:
preparing carbon-silicon-based oxide composite particles including a carbon matrix having pores, wherein at least a portion of the pores is filled with a silicon-based oxide;
forming crystalline carbon-containing layers on outer surfaces of the composite particles;
removing the carbon matrix from the composite particles to produce precursor particles of a negative electrode active material that include hollow cavities surrounded by the crystalline carbon-containing layers and the silicon-based oxide contained within the hollow cavities; and
forming amorphous carbon-containing layers on outer surfaces of the precursor particles.

13. The method of claim 12, wherein the carbon-silicon-based oxide composite particles are prepared by dispersing a mixture of a porous amorphous carbon matrix and a liquid silane compound in a solvent and then subjecting the mixture to oxidation treatment.

14. The method of claim 12 or claim 13, wherein:
(i) the crystalline carbon-containing layer is formed by mixing the carbon-silicon-based oxide composite particles with a solution including a mixture of a crystalline carbon precursor and a graphitization catalyst and then graphitizing the resulting mixture; and/or
(ii) the carbon matrix is removed by oxidation treatment of the carbon matrix.

15. A rechargeable battery comprising:
a negative electrode including the negative electrode active material according to any one of claims 1 to 11; and
a positive electrode.
